# EUROPÄISCHE PATENTSCHRIFT

(11) **EP 0 419 449 B1**
(45) Veröffentlichungstag und Bekanntmachung des Hinweises auf die Patenterteilung: **15.03.1995**
(21) Anmeldenummer: 90890265.3
(22) Anmeldetag: 20.09.1990
(51) Int. Cl.: C04B 28/32, C04B 14/04

(54) **Wasserbeständige Sorel-Zementzusammensetzung**
Water resistant sorel cement compositions
Compositions de ciment sorel résistant à l'eau

(30) Priorität: 22.09.1989 AT 2221/89
(43) Veröffentlichungstag der Anmeldung: 27.03.1991
(73) Patentinhaber: MAGINDAG Steirische Magnesit-Industrie Aktiengesellschaft, A-1130 Wien (AT); Duralit Gesellschaft m.b.H. & Co. KG Lind & Kerber, A-8641 St. Marein (AT)
(72) Erfinder: Birkner, Friedrich, A-3384 Gross Sierning Nr.33 (AT); Lind, Günther, D-7155 Oppenweiler (DE)
(74) Vertreter: Haffner, Thomas M., Dr.

(56) Entgegenhaltungen:
- EP-A- 0 241 103
- DE-C- 58 823
- FR-A- 575 497
- FR-A- 592 297
- US-A- 2 407 025
- US-A- 2 466 145
- US-A- 3 816 147

## Beschreibung

Die Erfindung bezieht sich auf eine wasserbeständige Sorel-Zementzusammensetzung auf der Basis von Gemischen von MgO, MgCl₂ und anorganischen Füllstoffen, wie z.B. Quarzsand.

Sorel-Zement ist eine Bezeichnung für verschiedene Massen, die als Grundbestandteile Magnesia (MgO) und Magnesiumchlorid (MgCl₂) in einer wäßrigen Lösung enthalten. Im gehärteten Zustand liegen diese Grundbestandteile von Sorel-Massen in Form von Magnesiumoxidchloridhydrat vor. Sorel-Zement wird härter und bindet rascher ab als Portland-Zement, hat jedoch nur beschränkte Wasserfestigkeit. Die Magnesiumoxidchloridhydrat-Kristalle, die den wesentlichen Bestandteil des Sorel-Zementes bilden, weisen starke strukturelle Ähnlichkeit mit Gips auf. Zwischen den Kristallen kommt es zu keiner echten Bindung, und die physikalischen Eigenschaften des Zements hängen von der Durchdringung der Kristalle untereinander ab. Durch Wasser wird die Haftung zwischen den Kristallen praktisch beseitigt.

Um Sorel-Zementmassen wasserbeständiger zu machen, wurde bereits vorgeschlagen, durch Zusatz von Phosphaten und Aluminaten unlösliche Magnesiumsalze zu bilden. Derartige Zusätze führen allerdings zu einer Abnahme der Härtungsgeschwindigkeit. Es ist weiters bekannt, Sorel-Zementmassen durch eine Reihe von Füllstoffen wasserfester zu machen. Aus der DE-PS 29 22 815 ist es bekanntgeworden, Ethylsilicat und Glasfasern der Masse zuzusetzen, wobei eine spezielle Vorgangsweise für die Aushärtung vorgeschlagen wird. Gemäß dieser DE-PS 29 22 815 wird als Kristallkeimbildner eine Vorgemischmasse in einer kristallkeimbildenden Menge, die ein Reaktionsprodukt aus Wasser, Magnesiumoxid und gegebenenfalls Magnesiumchlorid umfaßt, eingesetzt. Das Magnesiumoxid ist hiebei in der Magnesiumchloridlösung löslich, und aus einer übersättigten Lösung von MgO fällt in der Folge Mg(OCl)₂ aus.

Je nach Geschwindigkeit der Fällung entsteht eine mehr oder minder nadelige Kristallstruktur, welche zu einer Verfilzung der Struktur führt. Es ist bekannt, daß Zusätze von Kieselsäure und von Ammoniumphosphat die Wasserlöslichkeit herabsetzen.

Die Erfindung zielt nun darauf ab, eine wasserbeständige Sorel-Zementzusammensetzung der eingangs genannten Art zu bilden, welche sich bei hoher Feuchtigkeit durch geringe Quellung und durch hohe Festigkeitswerte, unabhängig von den Witterungsbedingungen auszeichnet. Zur Lösung dieser Aufgabe besteht die erfindungsgemäße wasserbeständige Sorel-Zementzusammensetzung der eingangs genannten Art im wesentlichen darin, daß sie bezogen auf MgO 2-35, insbesondere 5-15, Gew.-% eines anorganischen Kationenaustauschers, wie z.B. aktive Kieselerde oder Zeolith, enthält. Die Verwendung eines derartigen Kationenaustauschers führt zur Abnahme der Konzentration an Magnesiumionen in der Lösung und in der Folge zur Entstehung einer weitgehend homogenen, härtenden Masse mit hoher Druckfestigkeit. Die besonders hohe Druckfestigkeit wird hiebei darauf zurückgeführt, daß durch die verzögerte Kristallisation durch Abnahme der Magnesiumionenkonzentration in der Lösung viele Kristallisationskeime entstehen und in der Folge überaus kleine Nadeln ausgefällt werden, wodurch eine dichtere Struktur erzielt wird. Die Steigerung der Druckfestigkeit gegenüber konventionellen Sorel-Zementmassen wurde hiebei besonders im Fall der Verwendung von aktiver Kieselerde als Kationenaustauscher deutlich. Die eingesetzte aktive Kieselerde ist ein durch Laugung von Serpentin hergestelltes Produkt, welchem beim Laugungsvorgang zuvor in der Gitterstruktur enthaltene Magnesiumionen entzogen wurden. Das entstandene, nach der Laugung relativ poröse Material zeichnet sich auf Grund dieser Auslaugung von Magnesiumionen durch besonders hohe Magnesiumaffinität aus und ist in der Lage, die Kristallisation der übersättigten MgCl₂/MgO--Lösung in besonders günstiger Weise zu verzögern. Ähnliche Überlegungen gelten für Zeolithe, welche für Kationen als Ionenaustauscher in hohem Maße wirksam sind.

Gemäß einer bevorzugten Ausbildung der erfindungsgemäßen Sorel-Zementzusammensetzung ist die als Kationenaustauscher eingesetzte aktive Kieselerde auf eine maximale Korngröße von 20 » gemahlen und wird in dieser Form eingesetzt. Bedingt durch die inhärente Porenstruktur der aktiven Kieselerde genügt auf diese Weise eine relativ grobe Mahlung, wobei mit relativ geringem Anteil an aktiver Kieselerde eine wesentliche Verbesserung der Wasserbeständigkeit der Sorel-Zementmasse bei gleichzeitig hoher Druckfestigkeit erzielt wird.

Die Erfindung wird nachfolgend an Hand eines Ausführungsbeispieles näher erläutert.

### Beispiel:

Aus einem Sorel-Zement nach dem Stand der Technik wurden Normquader mit einer Grundfläche von 4 x 4 cm gegossen. Der Sorel-Zement bestand hiebei aus einer Mischung von 375 g Magnesiumoxid (K 10/21), 1125 g Quarzsand und 290 ml einer Magnesiumchloridlauge mit 26° Bé.

In einer Versuchsserie wurde der Quarzsand schrittweise durch gemahlene oder ungemahlene aktive Kieselerde ersetzt. Hiebei wurde ein schrittweiser Ersatz von 5-50 Gew.-% des Quarzsandes durchgeführt. Auch aus den hiebei gebildeten Sorel-Zementmischungen wurden Normquader hergestellt, und in der Folge wurde die Wasserbeständigkeit aller hergestellten Mischungen untersucht. Zur Bestimmung der Wasserbeständigkeit wurden die Quader 33 Tage lang in Wasser gelagert, wobei das Wasser täglich erneuert wurde. Nach Ablauf der Versuchszeit wurden von allen Versuchskörpern der Schwund bzw. die Quellung in Prozent, die Biegezugfestigkeit von sowohl den im Klimaraum gelagerten Prüfkörpern als auch den in Wasser gelagerten Prüfkörpern und die Druckfestigkeit von sowohl den im Klimaraum gelagerten als auch den im Wasser gelagerten Prüfkörpern bestimmt.

Die Ergebnisse dieser Untersuchung sind in der in der Zeichnung dargestellten Figur gezeigt. In dieser zeigen: Fig. 1 die Quellung der Prüfkörper, Fig. 2 die Biegezugfestigkeitswerte der Prüfkörper, von sowohl im trockenen Zustand als auch nach Lagerung in Wasser, und Fig. 3 die Druckfestigkeit der Prüfkörper, von sowohl im trockenen Zustand als auch nach Lagerung in Wasser.

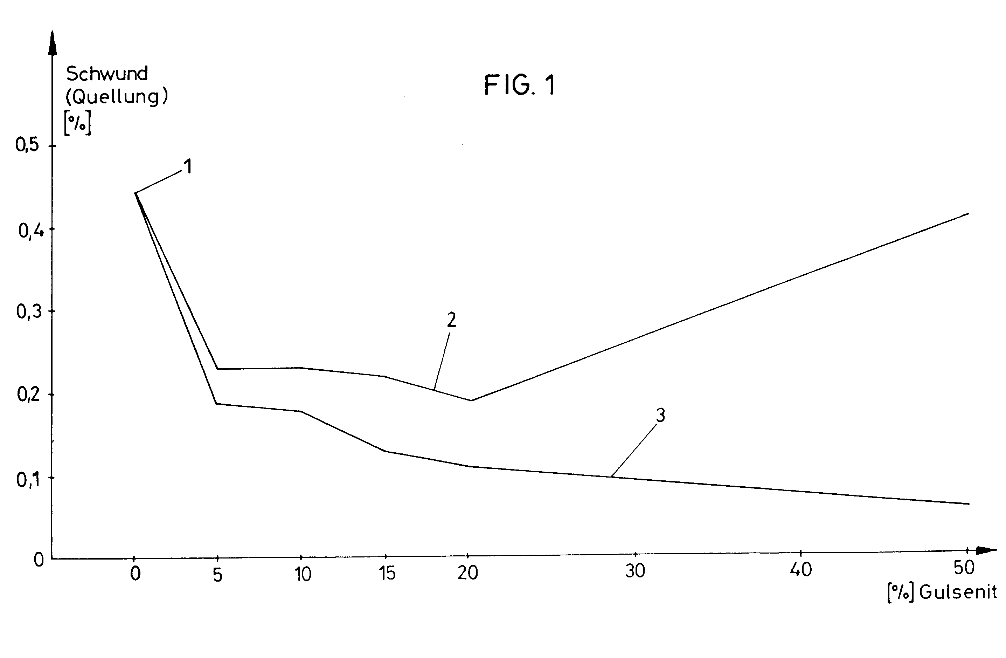

In Fig. 1 sind die Quellungswerte der Probekörper, welche 33 Tage in Wasser gelagert wurden, dargestellt. Hiebei ist mit 1 die Quellung der Probekörper dargestellt, bei welchen nur Quarzsand als Zuschlagstoff enthalten ist. Diese Probekörper zeigen eine Quellung von 0,44%. Kurve 2 zeigt hiebei die Quellungswerte von Probekörpern, in welchen der Quarzsand schrittweise durch auf 0,02 mm gemahlene aktive Kieselerde ersetzt wurde. Hiebei zeigt sich, daß bei Ersatz von 5 bis 20% des Quarzsandes lediglich Quellungen im Bereich zwischen 0,2 und 0,22% auftreten, worauf bei einem weiteren Ersatz des Quarzsandes durch aktive Kieselerde wiederum höhere Quellungswerte auftreten. Auch bei Ersatz von 50% des Quarzsandes durch aktive Kieselerde tritt jedoch keine so starke Quellung bei der Lagerung in Wasser auf, wie dies bei der Sorel-Zementmischung, welche lediglich Quarzsand als Füllstoff enthält, der Fall ist.

Kurve 3, welche die Quellungswerte für eine Sorel-Zementmischung zeigt, bei welcher Quarzsand schrittweise durch ungemahlene aktive Kieselerde ersetzt wurde, zeigt in bezug auf die Quellung noch bedeutend günstigere Werte. Bei Ersatz von 5 bis 10% des Quarzsandes durch ungemahlene aktive Kieselerde tritt lediglich eine Quellung von etwa 0,18% auf. Bei noch weiterem Ersatz des Quarzsandes durch aktive Kieselerde wird die Quellung in Wasser immer geringer, bis sie bei 50%-igem Ersatz des Quarzsandes durch aktive Kieselerde ihr Minimum mit einer etwa 0,07%-igen Quellung erreicht.

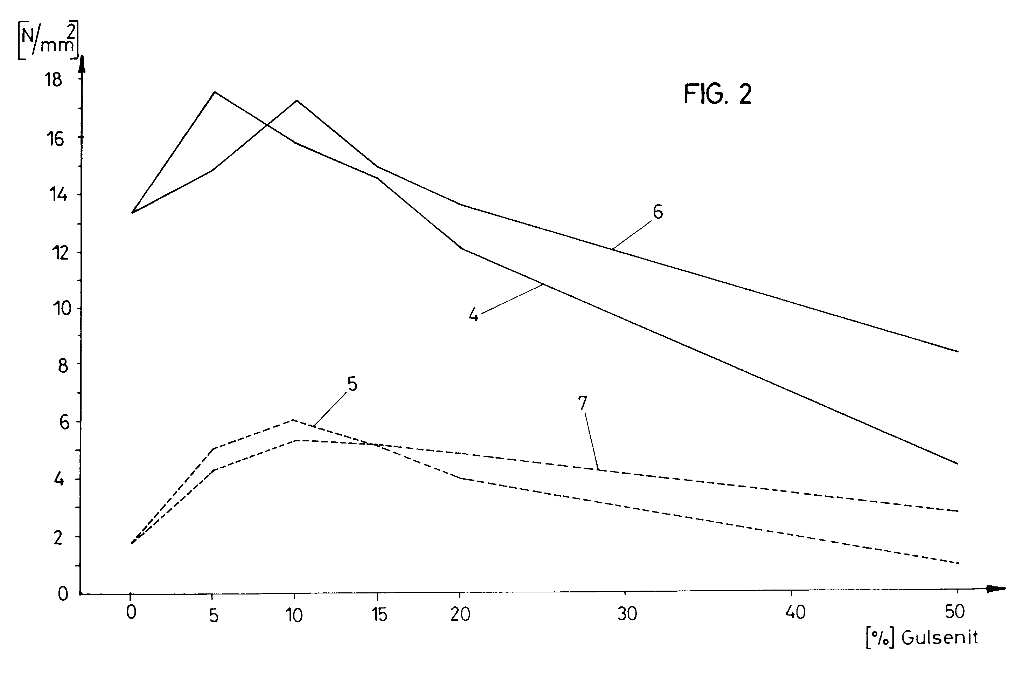

Fig. 2 zeigt die Biegezugfestigkeiten der verschiedenen Sorel-Zementmischungen von sowohl im trockenen Zustand als auch nach Lagerung in Wasser. Ein Sorel-Zement, welchem als Füllstoff lediglich Quarzsand zugemischt wurde, erreicht im trockenen Zustand eine Biegezugfestigkeit von etwa 13,36 N/mm². Im nassen Zustand sinkt die Biegezugfestigkeit nach einer Einweichdauer von 33 Tagen bei täglichem Wasserwechsel auf 1,8 N/mm². Bei Zusatz von gemahlener aktiver Kieselerde in Mengen bis zu 50 Gew.-% des Quarzsandes steigt die Biegezugfestigkeit, wie dies der Kurve 4 zu entnehmen ist, in trockenem Zustand bei Zusatz von 5% aktiver Kieselerde auf Werte von 17,58 N/mm² an, worauf die Biegezugfestigkeit bei einem weiteren Zusatz von aktiver Kieselerde langsam absinkt und bei einem Kieselerdezusatz von etwa 18% den gleichen Wert aufweist, wie jener Sorel-Zement, welcher lediglich durch Zusatz von Quarzsand erhalten wurde. Nach einer Wasserlagerung von 33 Tagen zeigt die Sorel-Zementmischung, welcher gemahlene aktive Kieselerde zugesetzt wurde, entsprechend der Kurve 5 ihre höchste Biegezugfestigkeit bei Ersatz von 10% des Quarzsandes durch aktive Kieselerde mit einem Wert von 6,1 N/mm². Bei einem weiteren Zusatz von aktiver Kieselerde sinkt auch hier die Biegezugfestigkeit ab, jedoch bleibt sie bis zu einem Ersatz von etwa 41% des Quarzsandes durch aktive Kieselerde über jenen Werten, welche für eine Sorel-Zementmischung, welche lediglich mit Quarzsand als Füllstoff hergestellt wurde, erreicht werden. Der Ersatz des Quarzsandes durch ungemahlene aktive Kieselerde entsprechend den Kurven 6 und 7 ergibt keine so hohen Biegezugfestigkeiten, wie dies durch Ersatz des Quarzsandes mit gemahlener aktiver Kieselerde erreicht wurde, jedoch ist im Vergleich zum Ersatz des Quarzsandes durch gemahlene aktive Kieselerde der Abfall der Biegezugfestigkeit bei höherem Anteil an aktiver Kieselerde nicht so stark, wie jener im Falle des Ersatzes durch gemahlene aktive Kieselerde. Die Differenzen der erzielbaren Biegezugfestigkeiten lassen sich auf die unterschiedlichen, für den Ionenaustausch zur Verfügung stehenden Oberflächen der aktiven Kieselerde zurückführen.

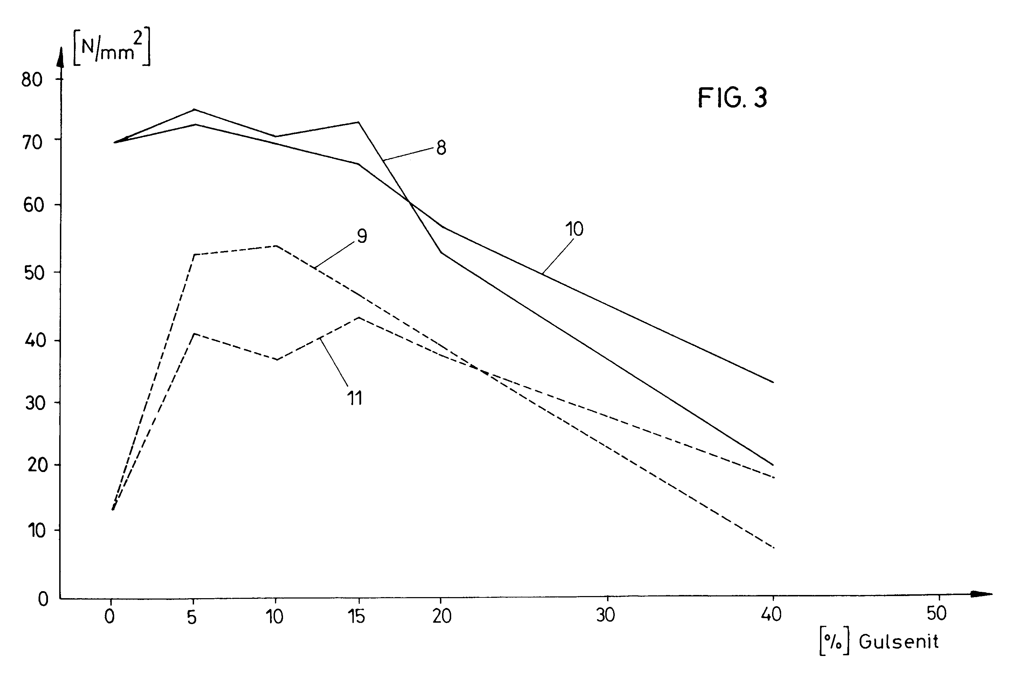

Fig. 3 zeigt die Druckfestigkeit der verschiedenen Sorel-Zementmischungen. Eine Sorel-Zementmischung, welche als Füllstoff lediglich Quarzsand enthält, weist im trockenen Zustand eine Druckfestigkeit von 69,2 N/mm² auf und nach 33-tägiger Lagerung in Wasser eine Druckfestigkeit von 14,2 N/mm². Die Kurven 8 und 9 zeigen jeweils die Druckfestigkeiten von Sorel--Zementmischungen, in welchen ein Teil des Quarzsandes durch gemahlene aktive Kieselerde ersetzt wurde. Hiebei werden bei Ersatz von 5 bis 15% des Quarzsandes durch aktive Kieselerde und Druckfestigkeiten im Bereich von 70 bis 76 N/mm² erreicht. Bei weiterem Ersatz des Quarzsandes sinkt die Druckfestigkeit wiederum stark ab. Bedeutend günstigere Druckfestigkeiten werden nach einer 33-tägigen Lagerung in Wasser erzielt, wenn der Quarzsand teilweise durch gemahlene aktive Kieselerde ersetzt wird. Hiebei werden im günstigsten Falle, d.i. bei 5- bis 10%-igem Ersatz, Druckfestigkeiten von größer als 50 N/mm² erzielt. Bei einem weiteren Ersatz des Quarzsandes durch aktive Kieselerde sinkt die Druckfestigkeit wiederum stark ab, erreicht jedoch erst bei einem etwa 35%-igem Ersatz des Quarzsandes durch aktive Kieselerde jene Werte, welche bei Sorel-Zementmischungen, welche nur Quarzsand als Füllstoff enthalten, erreicht werden.

Die Kurven 10 und 11 zeigen analoge Verhältnisse bei dem teilweisen Ersatz des Quarzsandes durch ungemahlene aktive Kieselerde. Hiebei werden in Übereinstimmung zu den Werten der Biegezugfestigkeit wiederum nicht so hohe Werte, wie im Falle des Ersatzes von gemahlener aktiver Kieselerde, erzielt, jedoch zeigt sich auch hier wiederum der langsamere Abfall der Druckfestigkeit bei Ersatz von mehr als 15% des Quarzsandes durch ungemahlene aktive Kieselerde. Insgesamt ergibt sich somit bei teilweisem Ersatz des Füllstoffes Quarzsand durch 5 bis 15 Gew.-% aktive Kieselerde, daß sowohl eine geringere Quellung der Sorel-Zementmischung bei Lagerung in Wasser auftritt als auch bedeutend bessere Biegezugfestigkeiten und Druckfestigkeiten der Mischung, sowohl im trockenen als auch im nassen Zustand erreicht werden können.

## Patentansprüche

1. Wasserbeständige Sorel-Zementzusammensetzung auf der Basis von Gemischen von MgO, MgCl₂ und anorganischen Füllstoffen, wie z.B. Quarzsand, dadurch gekennzeichnet, daß, bezogen auf MgO 2-35, insbesondere 5-15 Gew.-%, eines anorganischen Kationenaustauschers, wie z.B. aktive Kieselerde oder Zeolith, zugesetzt werden.

2. Sorel-Zementzusammensetzung nach Anspruch 1, dadurch gekennzeichnet, daß die aktive Kieselerde, auf eine maximale Korngröße von 20 » gemahlen, eingesetzt wird.

## Claims

1. Water-resistant Sorel's cement composition based on mixtures of MgO, MgCl₂ and inorganic fillers, such as e.g. quartz sand, characterised in that, relative to MgO, 2-35, in particular 5-15 wt.%, of an inorganic cation exchanger, such as e.g. active silica or zeolite, are added.

2. Sorel's cement composition according to claim 1, characterised in that active silica ground to a maximum particle size of 20 » is used.

## Revendications

1. Composition de ciment Sorel résistant à l'eau, à base de mélanges de MgO, MgCl₂ et de charges inorganiques, comme par exemple du sable siliceux, ***caractérisée en ce que***, sur la base de MgO, de 2 à 35, et plus spécifiquement de 5 à 15 % en poids d'un échangeur cationique inorganique, comme par exemple une silice active ou une zéolithe, sont ajoutés.

2. Composition de ciment Sorel selon la Revendication 1, ***caractérisée en ce que*** la silice active est employée broyée à une taille de grain maximale de 20 »m.
